# EUROPEAN PATENT APPLICATION

(11) **EP 2 693 547 A1**
(43) Date of publication of application: **05.02.2014**
(21) Application number: 12764856.6
(22) Date of filing: 23.02.2012
(51) Int. Cl.: H01M 8/02, H01M 8/10

(54) **FUEL BATTERY CELL**

(30) Priority: 31.03.2011 JP 2011077660
(71) Applicant: Nissan Motor Co., Ltd, Yokohama-shi, Kanagawa 221-0023 (JP)
(72) Inventor: ABE, Mitsutaka, Kanagawa 243-0123 (JP); OKU, Takanori, Kanagawa 243-0123 (JP)
(74) Representative: Grünecker, Kinkeldey, Stockmair & Schwanhäusser
(86) International application number: PCT/JP2012/054385
(87) International publication number: WO 2012/132666

(57) **Abstract**

Conventional fuel battery cells have difficulty in optimizing the performance of all the cells in a state stacked to form a fuel battery cell, and have a risk that durability at a joining area of a resin frame and a membrane electrode assembly may deteriorate due to the pressure difference between the cathode side and the anode side. A fuel battery cell C includes a membrane electrode assembly 2 having a frame 1, and separators 3 holding them therebetween, and includes diffuser areas D each provided between the frame 1 and each of the separators 3. In the diffuser area D on any one of the cathode side or the anode side, one of surfaces of the frame 1 and the separators 3 is provided with a protruding portion 10 in contact with the other surface, and a tip end of the protruding portion 10 is bonded to the other surface. In the diffuser area D on the other side, the frame 1 and the separators 3 are arranged away from each other. This structure achieves both optimization of the performance of each of cells in forming a fuel battery stack FS and improvement in the durability of the joining area of the frame 1 and the membrane electrode assembly 2.

## Description

### TECHNICAL FIELD

The present invention relates to a fuel battery cell (single cell) used as a power generation element for a fuel battery, and particularly relates to a fuel battery cell for forming a fuel battery stack in which multiple fuel battery cells are stacked on one another.

### BACKGROUND ART

A fuel battery cell of this type is described in Patent Literature 1, for example. The fuel battery cell described in Patent Literature 1 includes a membrane electrode assembly (MEA) in which an electrolyte membrane is held between a fuel electrode and an air electrode, a resin frame holding the periphery of the membrane electrode assembly, and two separators between which the membrane electrode assembly and the resin frame are sandwiched.

The aforementioned fuel battery cell includes a manifold area for a reaction gas and a flow regulating area between the resin frame and each of the separators. Protrusions are provided on both surfaces of the resin frame, the protrusions formed integrally with the resin frame and being in contact with both the separators. The protrusions keep the height of a flow channel of the flow regulating area. Then, multiple aforementioned fuel battery cells are stacked on one another under application of a certain load in their stacking direction, thereby forming a fuel battery stack.

### CITATION LIST

### PATENT LITERATURE

Patent Literature 1: Japanese Unexamined Patent Publication No. 2003-077499

### SUMMARY OF INVENTION

### TECHNICAL PROBLEM

The fuel battery cells of this type have dimensional tolerance and manufacturing variations in component elements, and also have slight differences such as a difference in thickness displacement of the membrane electrode assembly over time. For these reasons, multiple conventional fuel battery cells, more specifically, fuel battery cells each having a structure of binding the resin frame with the protrusions and the separators being in contact with each other, have variations thereamong in performance such as a contact pressure applied to the membrane electrode assembly and a gas flow rate in a state where the multiple fuel battery cells are stacked on one another to form a fuel battery stack. Hence, it is difficult to optimize the performance of all the cells.

Moreover, the fuel battery cell described above has a risk of lowering the durability of a joining area of the resin frame and the membrane electrode assembly because a pressure difference between gases on the cathode side and the anode side occurs depending on operational conditions of the fuel battery, and a bending stress due to the pressure difference concentrates at the joining area.

The present invention has been made in consideration of the foregoing circumstances, and has an objective to provide a fuel battery cell which includes a membrane electrode assembly having a frame in its periphery, and two separators holding the frame and the membrane electrode assembly therebetween, and which can achieve both optimization of the performance of each of cells in forming a fuel battery stack FS and improvement in the durability of the joining area of the frame and the membrane electrode assembly.

### SOLUTION TO PROBLEM

A fuel battery cell of the present invention includes: a membrane electrode assembly having a frame in a periphery of the membrane electrode assembly; two separators holding the frame and the membrane electrode assembly between the two separators; and diffuser areas each provided between the frame and each of the separators and allowing a reaction gas to flow through the diffuser areas.

The fuel battery cell also has a configuration wherein in the diffuser area on any one of a cathode side or an anode side, at least one of mutually opposed surfaces of the frame and the separator is provided with a protruding portion in contact with the other opposed surface, and a tip end of the protruding portion is bonded to the other opposed surface, and in the diffuser area on the other side, the frame and the separator are arranged away from each other. The above configuration solves the conventional problems.

The fuel battery cell of the present invention is also characterized in that a gas seal is provided between marginal portions of the frame and each of the separators, in the diffuser area on any one of the sides, at least one of mutually opposed surfaces of the frame and the separator is provided with a protruding portion in contact with the other opposed surface, in the diffuser area on the other side, an elastic body is placed between and in contact with the frame and the separator, and the elastic body is formed of a same material as the gas seal.

### EFFECTS OF THE INVENTION

According to the present invention, displacement in a thickness direction can be absorbed by a gap or the elastic body provided between the frame and the separator, and the frame is held by the protruding portion or the elastic body provided to either of the frame and the separator. Thereby, this structure achieves both optimization of the performance of each of cells in forming a fuel battery stack and improvement in the durability of the joining area of the frame and the membrane electrode assembly.

### BRIEF DESCRIPTION OF DRAWINGS

[Fig. 1] Fig. 1 is an exploded plan view for explaining an embodiment of a fuel battery cell of the present invention.
[Fig. 2] Fig. 2 is a plan view of the fuel battery cell illustrated in Fig. 1 after assembling.
[Fig. 3] Part (A) in Fig. 3 is an exploded perspective view for explaining a fuel battery stack formed by stacking the fuel battery cells illustrated in Fig. 1 and part (B) in Fig. 3 is a perspective view after assembling.
[Fig. 4] Fig. 4 is a cross sectional view of a principle part taken along the line A-A in Fig. 2.
[Fig. 5] Fig. 5 is a cross sectional view of a principle part illustrating another embodiment of a fuel battery cell.
[Fig. 6] Part (A) in Fig. 6 is a cross sectional view of a principle part illustrating another embodiment of a fuel battery cell, and part (B) in Fig. 6 is a cross sectional view of the principle part for explaining how to form a protruding portion.
[Fig. 7] Part (A) in Fig. 7 is a cross sectional view of a principle part illustrating another embodiment of a fuel battery cell, part (B) in Fig. 7 is a cross sectional view of the principle part illustrating an example where an elastic body is provided to a separator, and part (C) in Fig. 7 is a cross sectional view of the principle part illustrating an example where an elastic body is provided to a frame.
[Fig. 8] Fig. 8 is a cross sectional view of a principle part illustrating another embodiment of a fuel battery cell.
[Fig. 9] Fig. 9 is a cross sectional view of a principle part illustrating another embodiment of a fuel battery cell.
[Fig. 10] Fig. 10 is a cross sectional view of a principle part illustrating another embodiment of a fuel battery cell.
[Fig. 11] Fig. 11 is a cross sectional view of a principle part illustrating another embodiment of a fuel battery cell.
[Fig. 12] Fig. 12 is a cross sectional view of a principle part illustrating another embodiment of a fuel battery cell.

### DESCRIPTION OF EMBODIMENTS

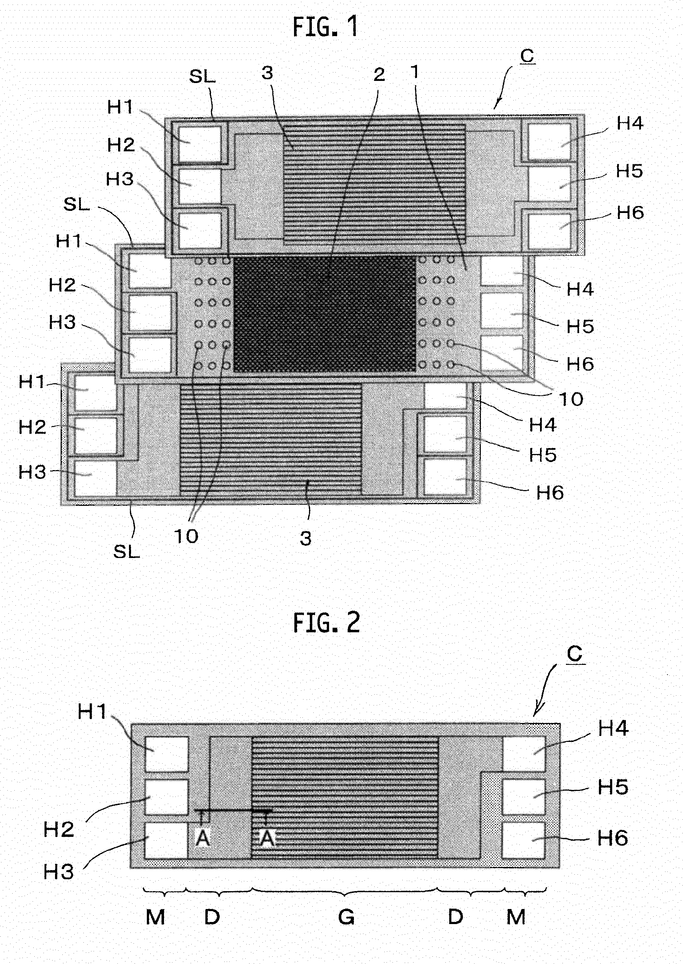

Figs. 1 and 2 are views for explaining an embodiment of the present invention.

A fuel battery cell (single cell) C illustrated in Fig. 1 includes a membrane electrode assembly 2 having a frame in a periphery thereof, and two separators 3, 3 holding the frame 1 and the membrane electrode assembly 2 therebetween. The frame 1 is in a thin plate form having a substantially constant thickness, and most part of the frame 1 other than its marginal portions has a thickness smaller than the membrane electrode assembly 2. In addition, the fuel battery cell (single cell) C includes a flow-passage region (diffuser area to be described later) between the frame 1 and each of the separators 3, 3, the flow-passage region being for a reaction gas to flow therethrough. Here, it is desirable that the frame be made of a resin and the separators 3 be made of a metal for the sake of manufacturing convenience.

The membrane electrode assembly 2 is generally called MEA, and has a structure in which an electrolyte layer made of a solid polymer, for example, is held between an air electrode layer (cathode) and a fuel electrode layer (anode). This membrane electrode assembly 2 generates power through electrochemical reaction while the fuel electrode layer is being supplied with a fuel gas (hydrogen) that is one of reaction gases, whereas the air electrode layer is being supplied with an oxidant gas (air) that is the other reaction gas. Note that examples of the membrane electrode assembly 2 include one in which gas diffusion layers made of carbon paper, a porous material or the like are provided to surfaces of the air electrode layer and the fuel electrode layer.

The frame 1 is integrated with the membrane electrode assembly 2 by resin molding (for example, injection molding), and is formed in a rectangular shape with the membrane electrode assembly 2 located in the center thereof in this embodiment. Moreover, the frame 1 is provided with manifold holes H1 to H6 in both end portions thereof, i.e., three manifold holes aligned in each end portion. A region extending from each of the groups of manifold holes to the membrane electrode assembly 2 is a flow-passage region of a reaction gas. All of the frame 1 and the two separators 3, 3 have rectangular shapes with approximately the same lengthwise and widthwise dimensions.

Each separator 3 is formed of a metal plate such as a stainless steel plate by press working. Each separator 3 is formed in such a way that its center portion corresponding to the membrane electrode assembly 2 has a corrugated shape in a cross section taken along a short-side direction. Corrugations in this corrugated shape continuously extend in the long-side direction as illustrated in the drawing. Thus, in the center portion in each separator 3 corresponding to the membrane electrode assembly 2, ridge portions in the corrugated shape are in contact with the membrane electrode assembly 2, whereas trough portions in the corrugated shape serve as channels for a reaction gas.

In addition, each separator 3 includes manifold holes H1 to H6 in both end portions thereof, the manifold holes H1 to H6 being equivalent to the manifold holes H1 to H6 in the frame 1. A region extending from each of the groups of manifold holes to the portion having the corrugated cross section is a flow-passage region of a reaction gas.

The foregoing frame 1, membrane electrode assembly 2 and two separators 3, 3 are stacked on one another to form a fuel battery cell C. In this state, the fuel battery cell C has a power generation area G; which is a region of the membrane electrode assembly 2, in the center, as particularly illustrated in Fig. 2, In addition, the fuel battery cell C includes manifold areas M, M for supplying and discharging the reaction gases at both sides of the power generation area G, and diffuser areas D, D each extending from one of the manifold areas M to the power generation area G and serving as the flow-passage region for the corresponding reaction gas.

Here, the diffuser areas D that are the flow-passage regions of the reaction gases are formed not only on both end sides of the cell in Fig. 2, but also between the frame 1 and the separators 3, 3 on both sides, i.e., on both of an anode side and a cathode side.

In one of the manifold areas M illustrated on the left side in Fig. 2, the manifold holes H1 to H3 are for oxidant gas supply (H1), cooling fluid supply (H2) and fuel gas supply (H3), and the manifold holes H1, H2, or H3 communicate with each other in a stacking direction to form their channel. Moreover, in the other manifold area M illustrated on the right side in Fig. 2, the manifold holes H4 to H6 are for fuel gas discharge (H4), cooling fluid discharge (H5) and oxidant gas discharge (H6), and the manifold holes H4, H5, or H6 communicate with each other in the stacking direction to form their channel. Here, part of or all of the manifold holes for supply and the manifold holes for discharge may have inverse positional relationships therebetween.

In addition, as illustrated in Fig. 1, the fuel battery cell C is provided with a gas seal SL between marginal portions of the frame 1 and each of the separators 3 and around the manifold holes H1 to H6. In a state where multiple fuel battery cells C are stacked on one another, a gas seal SL is also provided between cells, more specifically, between the separators 3 adjacent to each other. This embodiment employs a structure in which a cooling fluid flows between the adjacent separators 3, 3.

Each of the foregoing gas seals SL hermetically separates one of the flow-passage regions for the corresponding one of the oxidant gas, the fuel gas and the cooling fluid from the others in its interlayer space, and has an opening at an appropriate location around the manifold holes H1 to H6 such that the gas seal SL allows a predetermined fluid to flow into the interlayer space.

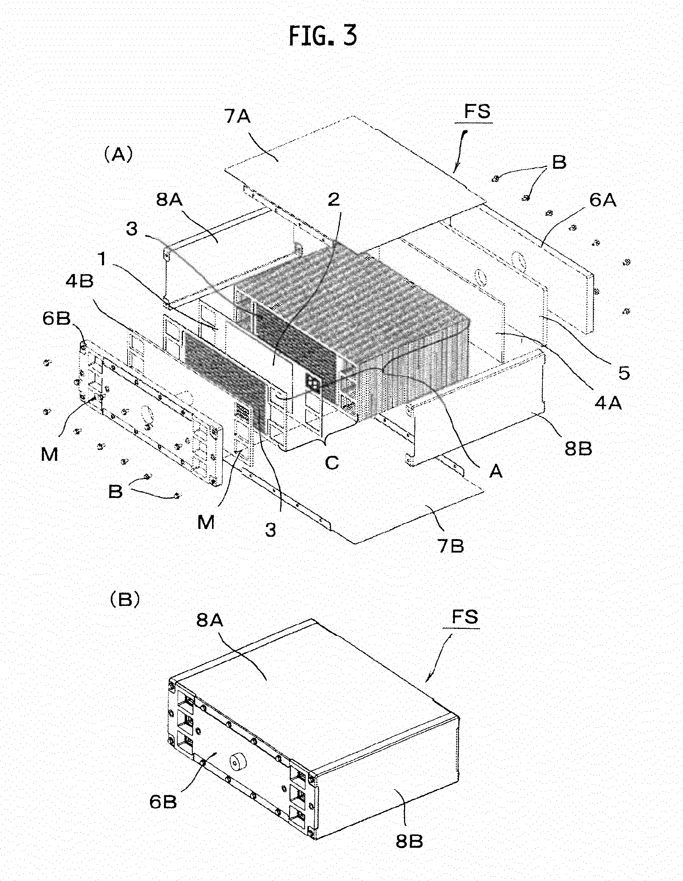

Multiple fuel battery cells C having the foregoing structure are stacked on one another to form a fuel battery stack FS illustrated in Fig. 3.

In the fuel battery stack FS, as illustrated in part (A) in Fig. 3, a stack unit A of the fuel battery cells C is provided with an end plate 6A on one end portion thereof in the cell stacking direction (right end portion in Fig. 3) with a current collector 4A and a spacer 5 interposed in between, and is provided with an end plate 6B on the other end portion thereof with a current collector 4B and an end plate 6B interposed in between. In addition, in the fuel battery stack FS, fastener plates 7A, 7B are provided on both surfaces (upper and lower surfaces in Fig. 3) of the stack unit A, the surfaces formed by the long sides of the fuel battery cells C, and reinforcing plates 8A, 8B are provided on both surfaces of the stack unit A, the surfaces formed by the short sides of the fuel battery cells C.

Moreover, in the fuel battery stack FS, the fastener plates 7A, 7B and the reinforcing plates 8A, 8B are joined to both end plates 6A, 6B with bolts B. In this way, as illustrated in part (B) of Fig. 3, the fuel battery stack FS has such a casing integrated structure that a predetermined contact pressure is applied to each of the fuel battery cells C with the stack unit A bound and pressurized in the cell stacking direction, and thereby maintains properties such as gas sealing properties and conductivity at favorable levels.

The fuel battery cells C as described hereinabove have dimensional tolerance and manufacturing variations in component elements, and also have slight differences such as a difference in thickness displacement of the membrane electrode assembly over time. In addition, a pressure difference between the gases on the cathode side and the anode side occurs depending on operational conditions of the fuel battery, and a bending stress due to the pressure difference tends to concentrate at the joining area of the resin frame 1 and the membrane electrode assembly 2.

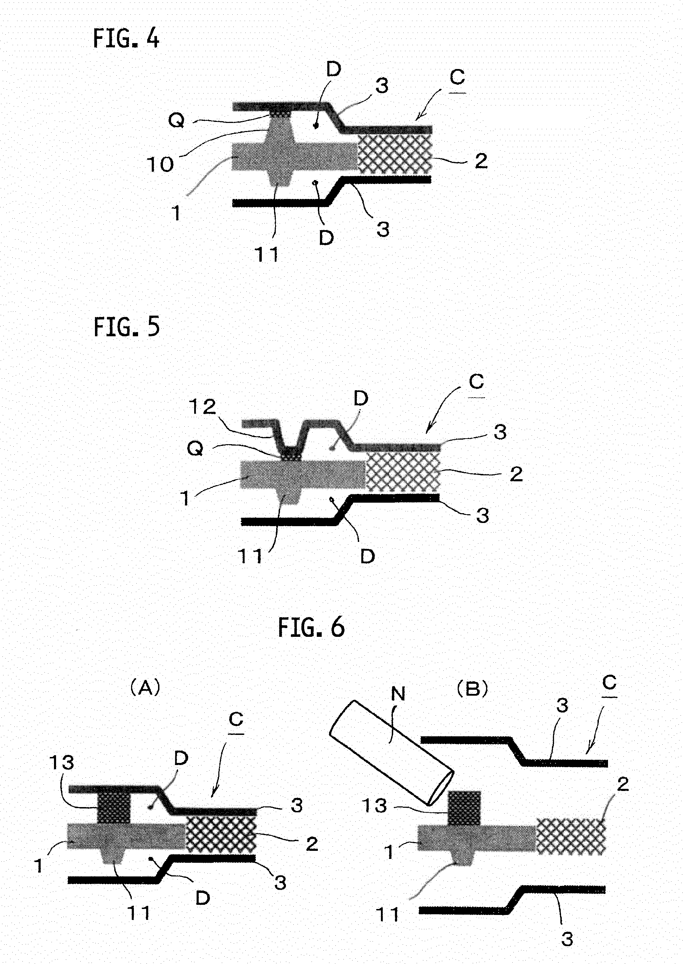

To address these, the fuel battery cell C is formed, as illustrated in Fig. 4, such that, in the diffuser area D on any one of the cathode side and the anode side, at least one of mutually opposed surfaces of the frame 1 and the separator 3 is provided with protruding portions 10 in contact with the other opposed surface, and the tip ends of the protruding portions 10 and the other opposed surface are bonded together. In the diffusion area D on the other side, the frame 1 and the separator 3 are arranged away from each other.

In the case of the illustrated fuel battery cell C, in the diffuser area D on the cathode side (the upper side in the drawing), the frame 1 is provided with the protruding portions 10 in contact with the separator 3 and the tip ends of the protruding portions 10 and the separator 3 are bonded together (Reference sign Q), whereas in the diffuser area D on the anode side (the lower side in the drawing), the frame 1 and the separator 3 are arranged away from each other. It should be noted that the positions of the cathode and the anode may be reversed from each other.

For bonding of the separator 3 and the protruding portions 10, any known adhesive effective in bonding them may be used in consideration of the materials (metal and resin) of the respective components, or instead, any appropriate adhesive means such as ultrasonic welding can be employed.

The protruding portions 10 in this embodiment each have a circular truncated cone shape, and are formed integrally with the frame 1 made of a resin. The protruding portions 10 are arranged at certain intervals as illustrated in Fig. 1. These protruding portions 10 are not limited in shape and the like, but may have any shape and the like that do not block the passage of the reaction gas.

Moreover, in this embodiment, the anode side surface (the lower surface in Fig. 4) of the frame 1 is provided with protruding portions 11 having a shape similar to that of the protruding portion 10. The protruding portions 11 are shorter than the protruding portion 10 on the cathode side, and form a gap from the separator 3 so that when the frame 1 and the separator 3 deform and come closer to each other, the protruding portions 11 block excessive displacement of them by coming into contact with the separator 3.

In the fuel battery cell C having the above structure, the frame 1 and the separator 3 are away from each other in the diffusion area D on the anode side, a pressure applied in the stacking direction acts mainly on the membrane electrode assembly 2 and the separators 3, whereby sufficient contact pressures of the membrane electrode assembly 2 and the separators 3 can be obtained.

Moreover, the fuel battery cell C can absorb displacement in a thickness direction by use of the gap between the frame 1 and the separator 3 in the diffuser area D on the anode side. In other words, even though the fuel battery cell C has dimensional tolerance and manufacturing variations in component elements and the membrane electrode assembly 2 deforms over time in the thickness direction, the fuel battery cell C can absorb the variations and the like by using the gap. Thus, in forming a fuel battery stack FD, the fuel battery cells C can suppress variations in performance such as a contact pressure and a gas flow rate among the cells.

Additionally, in the fuel battery cell C, the durability of the membrane electrode assembly 2 including the frame 1 is improved by bonding the tip ends of the protruding portions 10 of the frame 1 and the separator 3 together in the diffuser area D on the cathode side. More specifically, in the fuel battery cell C, the frame 1 is held on the separator 3 by the aforementioned protruding portions 10 bonded to the separator 3 even when a pressure difference occurs between the gases on the cathode side and the anode side. Thus, even when any one of the cathode side and the anode side has a higher pressure than the other side, the displacement of the frame 1 can be suppressed. In this way, the fuel battery cell C can prevent concentration of a bending stress at a joining area of the frame 1 and the membrane electrode assembly 2.

In this way, the fuel battery cell C can absorb the displacement in the thickness direction by using the gap provided between the frame 1 and the separator 3, and at the same time holds the frame 1 by the protruding portions 10 bonded to the separator 3. Thus, the fuel battery cell C can achieve both optimization of the performance of each of the cells in forming the fuel battery stack FS and improvement in the durability of the joining area of the frame 1 and the membrane electrode assembly 2.

Fig. 5 is a view for explaining another embodiment of a fuel battery cell of the present invention. In the following embodiment, the same component elements as those in the previous embodiment illustrated in Figs. 1 to 4 are given the same reference signs and the detailed description thereof is omitted. In addition, although the following embodiment will be described assuming that the upper side in the drawing is the cathode side, the positions of the cathode and the anode may be reversed.

An illustrated fuel battery cell C is configured such that, in the diffuser area D on the cathode side (upper side), the separator 3 is provided with protruding portions 12 in contact with the frame 1 as the opposed side, and the frame 1 and the tip ends of the protruding portions 12 are bonded together (Q). The protruding portions 12 are arranged at such predetermined intervals as not to block the passage of the reaction gas, as is the case with the protruding portions in the previous embodiment. Then, in the diffusion area D on the anode side, the frame 1 and the separator 3 are arranged away from each other.

As similar to the previous embodiment, the above fuel battery cell C can also absorb the displacement in the thickness direction by using the gap provided between the frame 1 and the separator 3, and at the same time holds the frame 1 by the protruding portions 12 provided to the separator 3. Thus, the fuel battery cells C can achieve both optimization of the performance of each of the cells in forming the fuel battery stack FS and improvement in the durability of the joining area of the frame 1 and the membrane electrode assembly 2.

Fig. 6 includes views for explaining another embodiment of a fuel battery cell of the present invention. A fuel battery cell C illustrated in part (A) in Fig. 6 is configured such that, in the diffuser area D on the cathode side (upper side), at least one of mutually opposed surfaces of the frame 1 and the separator 3 is provided with protruding portions in contact with the other opposed surface. The protruding portions 13 are formed of an adhesive placed between the frame 1 and the separator 3. The protruding portions 13 are also arranged at such predetermined intervals as not to block the passage of the reaction gas. Then, in the diffusion area D on the anode side, the frame 1 and the separator 3 are arranged away from each other.

The adhesive for forming the protruding portions 13 may be selected from materials specializing in adhesive force. For example, an epoxy-based material can be used. The protruding portions (adhesive) 13 may be formed in a predetermined shape in advance. However, a more preferable method is to eject the adhesive onto the frame 1 from a nozzle N of an adhesive supply device not illustrated as illustrated in part (B) in Fig. 6. Then, when the frame 1 and the separator 3 are joined together, the protruding portions (adhesive) 13 are bonded to both of them. This method is equivalent to a method of bonding together the tip ends of the protruding portions and the separator 3 as the opposed side. As a matter of course, the protruding portions 13 can be formed on (applied to) the separator 3, as is opposite to the example illustrated in the drawings.

The above fuel battery cell C can produce the same effects as in the previous embodiment, and can also contribute to the improvement of production efficiency, reduction of manufacturing costs and the like, owing to the following advantages. Specifically, since the protruding portions are formed of the adhesive, the frame 1 and the separator 3 can be simplified in shape without having any protruding portions and the protruding portions 13 can be formed simultaneously in a process of forming the gas seal SL (see Fig. 1). In the case where the gas seal SL and the protruding portions 13 are formed in the same process, it is desirable to use a material suitable for both use purposes, for example, an adhesive made of silicone rubber, fluororubber, polyolefin rubber or the like.

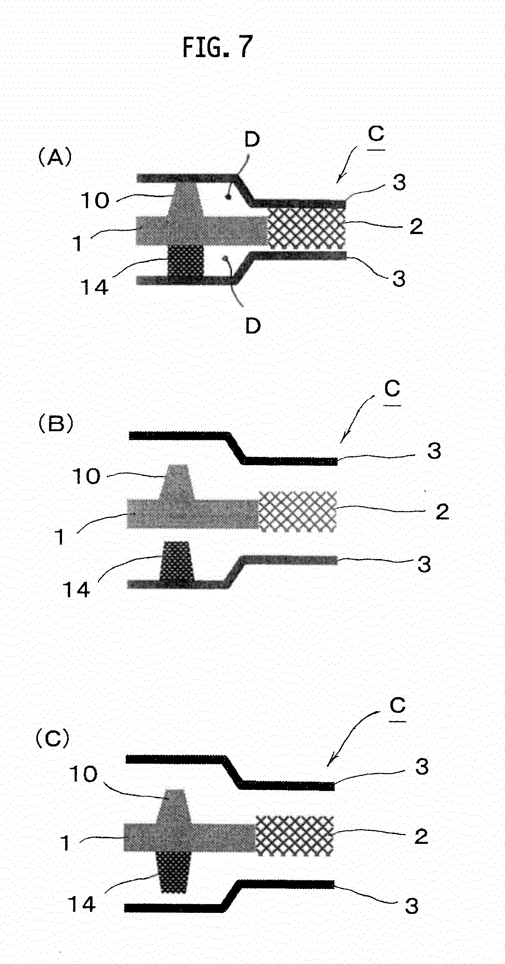

Fig. 7 includes views for explaining another embodiment of a fuel battery cell of the present invention. A fuel battery cell C illustrated in part (A) of Fig. 7 is configured such that at least one of mutually opposed surfaces of the frame 1 and the separator 3 is provided with protruding portions 10 in contact with the other opposed surface in the diffuser area D on any one of the cathode side and the anode side, and elastic bodies 14 in contact with the frame 1 and the separator 3 are provided between the two in the diffuser area D on the other side. The elastic bodies 14 are also arranged at such predetermined intervals as not to block the passage of the reaction gas, as is the case with the protruding portions in the previous embodiment.

Specifically, in the fuel battery cell C, the protruding portions 10 in contact with the separator 3 are provided to the frame 1 in the diffuser area D on the cathode side, and the elastic bodies 14 in contact with both the frame 1 and separator 3 are provided between the two in the diffuser area D on the anode side. The elastic bodies 14 can be provided to the separator 3 as illustrated in part (B) of Fig. 7 or provided to the frame 1 as illustrated in part (C) of Fig. 7.

The elastic bodies 14 may be formed in a predetermined shape in advance, but be more preferably formed of an adhesive, which is applied in a melted state and becomes elastic after hardening. The adhesive for forming the elastic bodies 14 may use a material such for example as silicone rubber, fluororubber, or polyolefin rubber. As similar to the foregoing protruding portions formed of the adhesive (reference numeral 13 in Fig. 6), the elastic bodies (adhesive) 14 are applied to any one of the frame 1 and the separator 3 followed by hardening, and then comes into contact with the other one when the frame 1 and the separator 3 are joined together.

Although the embodiments illustrated in Figs. 4 to 6 absorb the displacement in the thickness direction by using the gap between the separator 3 and the frame 1 on the anode side, the above fuel battery cell C absorbs the displacement in the thickness direction by using the elastic bodies 14 on the anode side. In addition, the fuel battery cell C holds the frame 1 by the protruding portions 10 of the frame 1 and the elastic bodies 14. Thus, as similar to the foregoing embodiment, the fuel battery cells C can achieve both optimization of the performance of each of the cells in forming the fuel battery stack FS and improvement in the durability of the joining area of the frame 1 and the membrane electrode assembly 2.

Since the elastic bodies 14 in the above fuel battery cell C are made of the adhesive which becomes elastic after hardening, the elastic bodies 14 can be formed simultaneously in the process of providing the gas seal SL (see Fig. 1), or in other words, the elastic bodies 14 and the gas seal SL can be made of the same material. Thus, the above fuel battery cell C can contribute to the improvement of production efficiency, reduction of manufacturing costs and the like. In the case where the gas seal SL and the elastic bodies 14 are formed in the same process, it is desirable to use a material suitable for both use purposes, for example, an adhesive made of silicone rubber, fluororubber, polyolefin rubber or the like. In addition, an adhesive having low adhesive strength may be used because the above fuel battery cell C can obtain the displacement absorption function and the function to hold the frame 1 only by brining the protruding portions 10 and the elastic bodies 14 in contact with their respective opposed surfaces. Accordingly, the surface treatment of the adhesive surface can be simplified or abolished, and an inexpensive adhesive can be employed. Thus, further reduction in the manufacturing costs can be achieved.

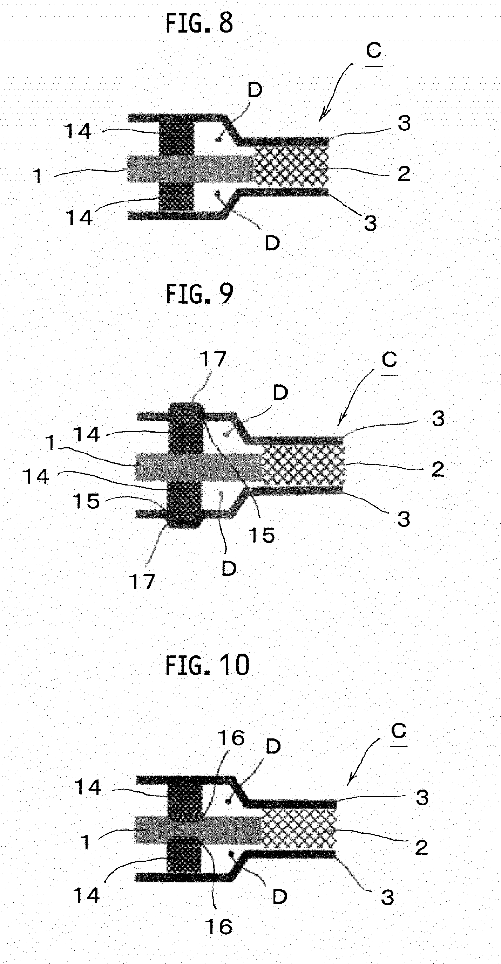

Fig. 8 is a view for explaining another embodiment of a fuel battery cell of the present invention. The illustrated fuel battery cell C is configured such that elastic bodies 14 in contact with both of the frame 1 and the separator 3 are provided between the two in the diffuser areas D on both of the cathode side and the anode side. In other words, the fuel battery cell C is one in which at least one of mutually opposed surfaces of the frame 1 and the separator 3 is provided with protruding portions in contact with the other opposed surface in each of the diffuser areas D on the cathode side and the anode side, the protruding portions being formed of elastic bodies 14 placed between the frame 1 and the separator 3. As is the case with the protruding portions in the previous embodiment, the elastic bodies 14 are arranged at such predetermined intervals as not to block the passages of the reaction gases. The elastic bodies 14 may also be formed in a predetermined shape in advance, but be more preferably formed of an adhesive, which is applied in a melted state and becomes elastic after hardening.

The above fuel battery cell C absorbs the displacement in the thickness direction by using the elastic bodies 14 on both the cathode side and the anode side. In addition, the fuel battery cell C holds the frame 1 by the elastic bodies 14 on both sides. Thus, as similar to the foregoing embodiment, the fuel battery cells C can achieve both optimization of the performance of each of the cells in forming the fuel battery stack FS and improvement in the durability of the joining area of the frame 1 and the membrane electrode assembly 2.

Figs. 9 and 10 are views for explaining still other embodiments of a fuel battery cell of the present invention. An illustrated fuel battery cell C is provided with elastic bodies 14 in both diffuser areas D as similar to the previous embodiment, and also are provided with recessed portions 15 (or 16) in at least one of mutually opposed surfaces of the frame 1 and the separator 3, the elastic bodies 14 being placed on the recessed portions 15 (or 16). In this structure, since the elastic bodies 14 are arranged at such predetermined intervals as not to block the passages of the reaction gases, the recessed portions 15 (or 16) are similarly formed at the predetermined intervals.

In the fuel battery cell C illustrated in Fig. 9, the recessed portions 15 are formed in the separator 3, and the elastic bodies 14 are placed on the recessed portions 15. In this case, the back sides of raised portions 17 formed in the separator 3 by press working can be used as the recessed portions 15. On the other hand, in the fuel battery cell C illustrated in Fig. 10, the recessed portions 16 are formed in the frame 1, and the elastic bodies 14 are placed on the recessed portions 16. In this case, the recessed portions 16 can be formed by surface abrasion processing such as sand blasting. Incidentally, as a matter of course, the recessed portions 15 as illustrated in Fig. 9 may be formed in the separators 3 by surface abrasion processing.

As similar to the foregoing embodiment, each of the above fuel battery cells C absorbs the displacement in the thickness direction by using the elastic bodies 14 on both sides, and holds the frame 1 by the elastic bodies 14 on both sides. Thus, the above fuel battery cells C can achieve both optimization of the performance of each of the cells in forming the fuel battery stack FS and improvement in the durability of the joining area of the frame 1 and the membrane electrode assembly 2.

Moreover, the recessed portions 15, 16 facilitate the positioning of the elastic bodies 14 thereby to contribute to the improvement of manufacturing efficiency, and make the contact area between each elastic body 14 with the frame 1 or the separator 3 large, thereby enhancing the adhesive strength and stability of the elastic body 14. Moreover, the enhanced stability of the elastic bodies 14 leads to the improvement of the durability, and also the expandable and shrinkable range of the elastic body 14 is elongated by an amount of the depth of the recessed portion 15, 16, so that the fuel battery cell C can have an increased absorption range of the displacement in the thickness direction.

In addition, in a structure where the back sides of the raised portions 17 formed by press working are used as the recessed portions 15 as in the fuel battery cell C illustrated in Fig. 9, the raised portions 17 serve as portions for forming a channel of the cooling fluid. More specifically, the fuel battery cells C are configured to cause the cooling fluid to flow between adjacent two of the fuel battery cells C in the stacked state, and therefore need to have a portion or member to form the channel. In this regard, if the back sides of the raised portions 17 formed in the separator 3 by press working are used as the recessed portions 15 as in this embodiment, the raised portions 17 for forming the channel and the recessed portions 15 for placing the elastic bodies 14 thereon can be formed in one process. This is very advantageous in manufacturing efficiency and manufacturing costs.

In addition, if the recessed portions 16 in the frame 1 are formed by surface abrasion processing as in the fuel battery cell C illustrated in Fig. 10, and particularly have fine surface asperities formed by sand blasting, the contact area of the elastic body 14 can be increased, thereby further enhancing the adhesive strength. The enhanced adhesive strength prevents the elastic body 14 from coming off, and thereby provides much higher durability.

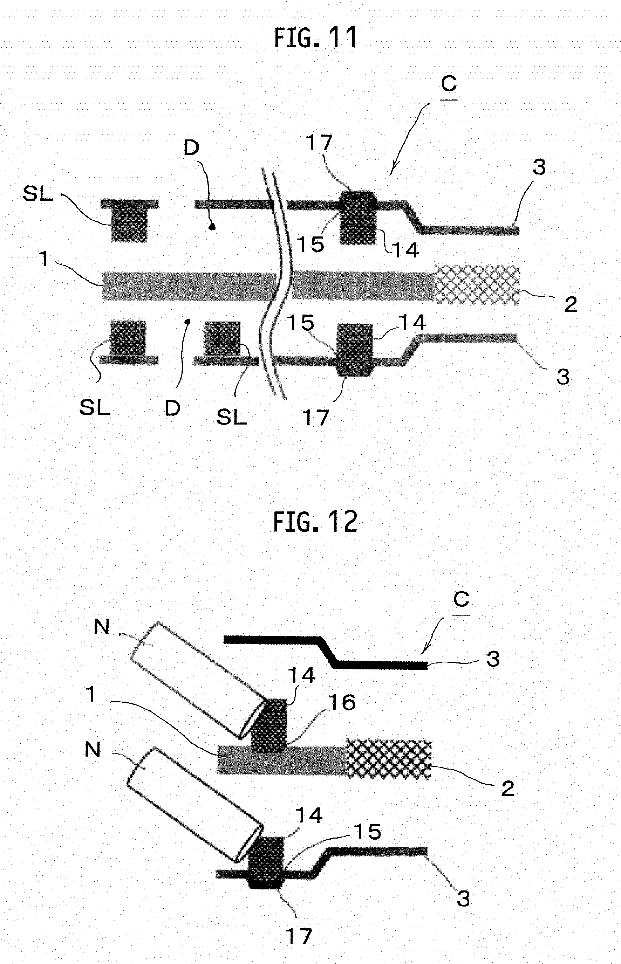

The elastic bodies 14 in Figs. 7 to 10 can be formed in the same process as the gas seals SL (see Fig. 1) as illustrated in Fig. 11. Specifically, the elastic bodies 14 may be also formed by ejection molding or baking. Using, as a material, an adhesive that becomes elastic after hardening, the elastic bodies 14 can be formed of the same structure (material) as the gas seals LS, as is the case with the protruding portions 13 illustrated in Fig. 6. This is very advantageous in manufacturing efficiency and manufacturing costs.

Fig. 12 is a view for explaining another embodiment of a fuel battery cell of the present invention. The illustrated fuel battery cell C is configured such that the recessed portions 16 are provided to the frame 1 in the diffuser area D on the cathode side (the upper side in the drawing), whereas the recessed portions 15 are provided to the separator 3 in the diffuser area D on the anode side (the lower side in the drawing). Alternatively, the recessed portions 15 may be provided to the separator 3 in the diffuser area D on the cathode side, whereas the recessed portions 16 may be provided to the frame 1 in the diffuser area D on the anode side, as is opposite to the illustrated example. In short, it suffices that the recessed portions 15, 16 be provided on surfaces facing in the same direction, and more preferably be provided on surfaces facing upward during assembling and manufacturing.

In the above fuel battery cell C, the elastic bodies 14 are formed by: using the adhesive that becomes elastic after hardening; applying the adhesive to the recessed portions 15, 16 by ejecting the adhesive in a melted state from a nozzle N of an adhesive supply device not illustrated; and then hardening the applied adhesive. Hence, if the recessed portions 15, 16 are provided on the upper-side surfaces of the frame 1 and the separator 3 in both the diffuser areas D as in the illustrated example, the adhesive in the melted state can be applied from the same direction and the adhesive can be prevented from flowing out. This is advantageous in manufacturing efficiency and enables favorable formation of the elastic systems 14.

As described in each of the above embodiments, the fuel battery cells C of the present invention can achieve both optimization of the performance of each of the cells in forming the fuel battery stack FS and improvement in the durability of the joining area of the frame 1 and the membrane electrode assembly 2. Hence, the fuel battery stack formed by stacking multiple aforementioned fuel battery cells C can generate power stably for a long period of time because the power generating performance and durability are uniform across all the fuel battery cells C.

The structures of the fuel battery cells of the present invention are not limited to those in the foregoing embodiments, but the details of the structures may be altered appropriately without departing from the spirit of the present invention. For example, although the foregoing embodiments illustrate the example in which the protruding potions and the elastic bodies or the elastic bodies and the elastic bodies on the cathode side and the anode side are located on the same positions, they may be offset from each other in plan view. In addition, the structures of the foregoing embodiments may be employed together in any combination.

### REFERENCE SIGNS LIST

- C: Fuel battery cell
- D: Diffuser area
- FS: Fuel battery stack
- SL: Gas seal
- 1: Frame
- 2: Membrane electrode assembly
- 3: Separator
- 10, 12: Protruding portion
- 13: Protruding portion made of adhesive
- 14: Elastic body
- 15, 16: Recessed portion
- 17: Raised portion

## Claims

1. A fuel battery cell comprising:
a membrane electrode assembly having a frame in a periphery of the membrane electrode assembly;
two separators holding the frame and the membrane electrode assembly between the two separators; and
diffuser areas each provided between the frame and each of the separators and allowing a reaction gas to flow through the diffuser areas, wherein
in the diffuser area on any one of a cathode side or an anode side, at least one of mutually opposed surfaces of the frame and the separator is provided with a protruding portion in contact with the other opposed surface, and a tip end of the protruding portion is bonded to the other opposed surface, and
in the diffuser area on the other side, the frame and the separator are arranged away from each other.

2. The fuel battery cell according to claim 1, wherein the protruding portion is formed of an adhesive placed between the frame and the separator.

3. A fuel battery cell comprising:
a membrane electrode assembly having a frame in a periphery of the membrane electrode assembly; and
two separators holding the frame and the membrane electrode assembly between the two separators;
a gas seal provided between marginal portions of the frame and each of the separators; and
diffuser areas each provided between the frame and each of the separators and allowing a reaction gas to flow through the diffuser areas, wherein
in the diffuser area on any one of a cathode side or an anode side, at least one of mutually opposed surfaces of the frame and the separator is provided with a protruding portion in contact with the other opposed surface, and
in the diffuser area on the other side, an elastic body is placed between and in contact with the frame and the separator, and the elastic body is formed of a same material as the gas seal.

4. The fuel battery cell according to claim 3, wherein the elastic body is formed of an adhesive that becomes elastic after hardening.

5. The fuel battery cell according to claim 3, wherein the protruding portion is formed of an elastic body.

6. The fuel battery cell according to any one of claims 3 to 5, wherein in each of the diffuser areas, at least one of mutually opposed surfaces of the frame and the separator is provided with a recessed portion, and the elastic body is placed on the recessed portion.

7. The fuel battery cell according to claim 6, wherein the recessed portion provided to the separator is a back side portion of a raised portion formed in the same separator by press working.

8. The fuel battery cell according to claim 6 or 7, wherein the recessed portion is formed by surface abrasion processing.

9. The fuel battery cell according to any one of claims 6 to 8, wherein
the frame in the diffuser area on the cathode side is provided with the recessed portion, while the separator in the diffuser area on the anode side is provided with the recessed portion, or
the separator in the diffuser area on the cathode side is provided with the recessed portion, while the frame in the diffuser area on the anode side is provided with the recessed portion.
